# EUROPEAN PATENT APPLICATION

(11) **EP 4 678 914 A1**
(43) Date of publication of application: **14.01.2026**
(21) Application number: 24766837.9
(22) Date of filing: 16.02.2024
(51) Int. Cl.: F04B 39/00, F04B 35/02

(54) **GAS COMPRESSOR**

(30) Priority: 08.03.2023 JP 2023035514
(71) Applicant: KAWASAKI JUKOGYO KABUSHIKI KAISHA, Chuo-ku Kobe-shi Hyogo 650-8670 (JP); Sugino Machine Limited, Namerikawa City, Toyama 936-8577 (JP)
(72) Inventor: MIBU, Koki, Hyogo, 650-8670 (JP); HATTORI, Tomohide, Hyogo, 650-8670 (JP); NAKAGAWA, Yasunobu, Toyama, 936-8577 (JP); TSUBONO, Kenichi, Toyama, 936-8577 (JP); MIZUKAMI, Shunichi, Toyama, 936-8577 (JP)
(74) Representative: Dehns
(86) International application number: PCT/JP2024/005497
(87) International publication number: WO 2024/185466

(57) **Abstract**

A gas compressor (1) according to one embodiment includes a gas cylinder (3A) and a hydraulic cylinder (4A). The gas cylinder (3A) includes a gas cylinder tube (31), a gas cover (32), and a gas piston (33). The gas piston (33) forms a compression chamber (3a) between the gas piston (33) and the gas cover (32). The hydraulic cylinder (4A) includes a hydraulic cylinder tube (41), a first hydraulic cover (42), a second hydraulic cover (43), and a hydraulic piston (44). The hydraulic piston (44) forms a first driving chamber (4a) between the hydraulic piston (44) and the first hydraulic cover (42), and forms a second driving chamber (4b) between the hydraulic piston (44) and the second hydraulic cover (43). The gas compressor (1) further includes: a rod (51) that penetrates the first hydraulic cover (42) and that couples the gas piston (33) and the hydraulic piston (44) to each other; and a position detector (8A) that is mounted to the second hydraulic cover (43) and that detects a position of the hydraulic piston (44).

## Description

### Technical Field

The present disclosure relates to a hydraulically driven gas compressor.

### Background Art

Conventionally, hydraulically driven gas compressors have been known. For example, this type of gas compressor is used as a large-sized gas compressor.

For example, Patent Literature 1 discloses a gas compressor including a gas cylinder and a hydraulic cylinder. Specifically, in the gas compressor of Patent Literature 1, the gas cylinder includes a gas cylinder tube, a gas cover, and a gas piston, and the hydraulic cylinder includes a hydraulic cylinder tube, a pair of hydraulic covers, and a hydraulic piston.

The gas cylinder and the hydraulic cylinder are located coaxially. The gas cover is positioned on one side of the gas cylinder tube, specifically on the opposite side to the hydraulic cylinder. The gas piston is located inside the gas cylinder tube, and forms a compression chamber between the gas piston and the gas cover. The pair of hydraulic covers are positioned on both sides of the hydraulic cylinder tube, respectively. The hydraulic piston is located inside the hydraulic cylinder tube, and forms a pair of driving chambers between the hydraulic piston and the pair of hydraulic covers. The gas piston and the hydraulic piston are coupled to each other by a rod that penetrates the hydraulic cover on the gas cylinder side.

Further, in the gas compressor of Patent Literature 1, a position sensor that measures the position of the hydraulic piston is mounted to the hydraulic cylinder tube.

### Citation List

### Patent Literature

PTL 1: Japanese National Phase PCT Laid-Open Application Publication No. 2021-522446

### Summary of Invention

### Technical Problem

However, in a case where the position sensor is mounted to the hydraulic cylinder tube as in the gas compressor of Patent Literature 1, it can only be detected whether or not the hydraulic piston is at the same position as that of the position sensor.

In view of the above, an object of the present disclosure is to provide a gas compressor capable of detecting the stroke of the hydraulic piston.

### Solution to Problem

The present disclosure provides a gas compressor including: a gas cylinder including a gas cylinder tube, a gas cover, and a gas piston, the gas cover being positioned on one side of the gas cylinder tube, the gas piston being located inside the gas cylinder tube and forming a compression chamber between the gas piston and the gas cover; a hydraulic cylinder including a hydraulic cylinder tube, a first hydraulic cover, a second hydraulic cover, and a hydraulic piston, the first hydraulic cover and the second hydraulic cover being positioned on both sides of the hydraulic cylinder tube, respectively, the hydraulic piston being located inside the hydraulic cylinder tube, forming a first driving chamber between the hydraulic piston and the first hydraulic cover, and forming a second driving chamber between the hydraulic piston and the second hydraulic cover; a rod that penetrates the first hydraulic cover and that couples the gas piston and the hydraulic piston to each other; and a position detector that is mounted to the second hydraulic cover and that detects a position of the hydraulic piston.

### Advantageous Effects of Invention

The present disclosure provides a gas compressor capable of detecting the stroke of the hydraulic piston.

### Brief Description of Drawings

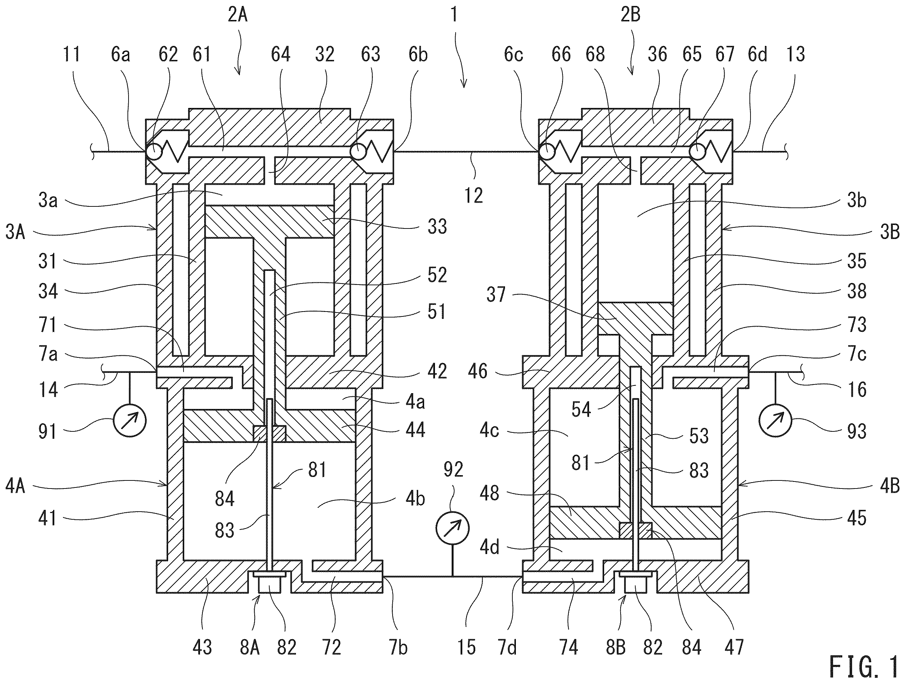

FIG. 1 shows a schematic configuration of a gas compressor according to one embodiment.

### Description of Embodiments

FIG. 1 shows a gas compressor 1 according to one embodiment. In the present embodiment, the gas compressor 1 includes a first gas booster 2A and a second gas booster 2B, and compresses gas in two stages. The gas to be compressed is not particularly limited to a specific type of gas, but is, for example, hydrogen.

The first gas booster 2A includes a gas cylinder 3A, a hydraulic cylinder 4A, a rod 51, and a position detector 8A. The second gas booster 2B includes a gas cylinder 3B, a hydraulic cylinder 4B, a rod 53, and a position detector 8B. A major difference between the first gas booster 2A and the second gas booster 2B is a size difference between the gas cylinder 3A and the gas cylinder 3B. Specifically, the diameter of a below-described gas piston 37 is less than the diameter of a below-described gas piston 33. For example, the area of the gas piston 33 is two to ten times as great as the area of the gas piston 37. Alternatively, the internal volume of a below-described gas cylinder tube 31 and the internal volume of a below-described gas cylinder tube 35 may be made different from each other not by the diameters of the gas pistons 33 and 37, but by other elements.

The gas cylinder 3A and the hydraulic cylinder 4A of the first gas booster 2A are located coaxially, and the gas cylinder 3B and the hydraulic cylinder 4B of the second gas booster 2B are located coaxially. In the present embodiment, the axial direction of each of the gas cylinder 3A, the gas cylinder 3B, the hydraulic cylinder 4A, and the hydraulic cylinder 4B is an upward-downward direction. The axial direction of each of the gas cylinder 3A, the gas cylinder 3B, the hydraulic cylinder 4A, and the hydraulic cylinder 4B may be parallel to the vertical direction, or may be slightly inclined relative to the vertical direction, for example, by 20 degrees or less. In the present embodiment, the hydraulic cylinder 4A is located under the gas cylinder 3A, and the hydraulic cylinder 4B is located under the gas cylinder 3B.

Regarding the first gas booster 2A, the gas cylinder 3A includes the gas cylinder tube 31, a gas cover 32, and the gas piston 33. The gas cylinder tube 31 has a tubular shape extending in the upward-downward direction. The gas cover 32 is positioned on one side of the gas cylinder tube 31, specifically on the opposite side to the hydraulic cylinder 4A, and seals an upper opening of the gas cylinder tube 31. The gas piston 33 is located inside the gas cylinder tube 31, and forms a compression chamber 3a between the gas piston 33 and the gas cover 32. A sealing material such as an O-ring is attached to the outer peripheral surface of the gas piston 33.

The gas cylinder 3A further includes a tubular jacket 34, which accommodates the gas cylinder tube 31 and which extends from the gas cover 32 to a below-described first hydraulic cover 42. There is an annular cooling chamber between the gas cylinder tube 31 and the jacket 34. A coolant is fed to and discharged from the cooling chamber. However, depending on the temperature of the gas after the gas is compressed in the first stage, the jacket 34 may be eliminated.

The gas cover 32 is, for example, disc-shaped. In the present embodiment, an end surface of the gas cover 32, the end surface facing radially outward, includes a suction port 6a and a delivery port 6b. Alternatively, the top surface of the gas cover 32 may include one of or both the suction port 6a and the delivery port 6b.

The gas cover 32 includes: a first gas passage 61 extending from the suction port 6a to the delivery port 6b; and a second gas passage 64, through which the first gas passage 61 communicates with the compression chamber 3a. In the present embodiment, a check valve 62 is located on the first gas passage 61 between the suction port 6a and the second gas passage 64, and a check valve 63 is located on the first gas passage 61 between the second gas passage 64 and the delivery port 6b.

Alternatively, the check valve 62 may be located on a below-described gas supply passage 11, and the check valve 63 may be located on a below-described gas communication passage 12. In this case, the suction port 6a and the delivery port 6b may be included in an upper part of the gas cylinder tube 31, and the first gas passage 61 and the second gas passage 64 may be eliminated. In a case where the suction port 6a and the delivery port 6b are included in the gas cylinder tube 31, a pipe that serves as the gas supply passage 11 may penetrate the jacket 34 to connect to the suction port 6a, and a pipe that serves as the gas communication passage 12 may penetrate the jacket 34 to connect to the delivery port 6b.

The hydraulic cylinder 4A includes a hydraulic cylinder tube 41, the first hydraulic cover 42, a second hydraulic cover 43, and a hydraulic piston 44. The hydraulic cylinder tube 41 has a tubular shape extending in the upward-downward direction, and the first hydraulic cover 42 and the second hydraulic cover 43 are positioned on both sides of the hydraulic cylinder tube 41, respectively. The first hydraulic cover 42 seals an upper opening of the hydraulic cylinder tube 41, and the second hydraulic cover 43 seals a lower opening of the hydraulic cylinder tube 41.

The hydraulic piston 44 is located inside the hydraulic cylinder tube 41. The hydraulic piston 44 forms a first driving chamber 4a between the hydraulic piston 44 and the first hydraulic cover 42, and forms a second driving chamber 4b between the hydraulic piston 44 and the second hydraulic cover 43. A sealing material such as an O-ring is attached to the outer peripheral surface of the hydraulic piston 44. In the present embodiment, the hydraulic piston 44 is configured as a single-component piston. Alternatively, the hydraulic piston 44 may include multiple components. For example, the hydraulic piston 44 may include two plates and a rod located therebetween. In this case, the hydraulic oil may be supplied between the two plates.

In the present embodiment, a lower opening of the gas cylinder tube 31 is sealed by the first hydraulic cover 42. The rod 51 penetrates the first hydraulic cover 42, and couples the gas piston 33 and the hydraulic piston 44 to each other. Alternatively, similar to the gas compressor disclosed in Patent Literature 1, the lower opening of the gas cylinder tube 31 may be sealed by a middle cover, and a middle tube surrounding the space around the rod 51 may be located between the middle cover and the first hydraulic cover 42.

Each of the first hydraulic cover 42 and the second hydraulic cover 43 is, for example, disc-shaped. In the present embodiment, an end surface of the first hydraulic cover 42, the end surface facing radially outward, includes a first supply/discharge port 7a, and an end surface of the second hydraulic cover 43, the end surface facing radially outward, includes a second supply/discharge port 7b. However, the positions of the first supply/discharge port 7a and the second supply/discharge port 7b are not limited to this. For example, the first supply/discharge port 7a may be included in an upper part of the hydraulic cylinder tube 41, and a below-described first hydraulic passage 71 may be eliminated. Similarly, the second supply/discharge port 7b may be included in a lower part of the hydraulic cylinder tube 41, and a below-described second hydraulic passage 72 may be eliminated.

The first hydraulic cover 42 includes the first hydraulic passage 71, through which the first supply/discharge port 7a and the first driving chamber 4a communicate with each other. The second hydraulic cover 43 includes the second hydraulic passage 72, through which the second supply/discharge port 7b and the second driving chamber 4b communicate with each other.

Regarding the second gas booster 2B, the gas cylinder 3B includes the gas cylinder tube 35, a gas cover 36, and the gas piston 37. The gas cylinder tube 35 has a tubular shape extending in the upward-downward direction. The gas cover 36 is positioned on one side of the gas cylinder tube 35, specifically on the opposite side to the hydraulic cylinder 4B, and seals an upper opening of the gas cylinder tube 35. The gas piston 37 is located inside the gas cylinder tube 35, and forms a compression chamber 3b between the gas piston 37 and the gas cover 36. A sealing material such as an O-ring is attached to the outer peripheral surface of the gas piston 37.

The gas cylinder 3B further includes a tubular jacket 38, which accommodates the gas cylinder tube 35 and which extends from the gas cover 36 to a below-described first hydraulic cover 46. There is an annular cooling chamber between the gas cylinder tube 35 and the jacket 38. A coolant is fed to and discharged from the cooling chamber. However, depending on the temperature of the gas after the gas is compressed in the second stage, the jacket 38 may be eliminated.

The gas cover 36 is, for example, disc-shaped. In the present embodiment, an end surface of the gas cover 36, the end surface facing radially outward, includes a suction port 6c and a delivery port 6d. Alternatively, the top surface of the gas cover 36 may include one of or both the suction port 6c and the delivery port 6d.

The gas cover 36 includes: a first gas passage 65 extending from the suction port 6c to the delivery port 6d; and a second gas passage 68, through which the first gas passage 65 and the compression chamber 3b communicate with each other. In the present embodiment, a check valve 66 is located on the first gas passage 65 between the suction port 6c and the second gas passage 68, and a check valve 67 is located on the first gas passage 65 between the second gas passage 68 and the delivery port 6d.

Alternatively, the check valve 66 may be located on the below-described gas communication passage 12, and the check valve 67 may be located on a below-described gas discharge passage 13. In this case, the suction port 6c and the delivery port 6d may be included in an upper part of the gas cylinder tube 35, and the first gas passage 65 and the second gas passage 68 may be eliminated. In a case where the suction port 6c and the delivery port 6d are included in the gas cylinder tube 35, a pipe that serves as the gas communication passage 12 may penetrate the jacket 38 to connect to the suction port 6c, and a pipe that serves as the gas discharge passage 13 may penetrate the jacket 38 to connect to the delivery port 6d.

The hydraulic cylinder 4B includes a hydraulic cylinder tube 45, the first hydraulic cover 46, a second hydraulic cover 47, and a hydraulic piston 48. The hydraulic cylinder tube 45 has a tubular shape extending in the upward-downward direction, and the first hydraulic cover 46 and the second hydraulic cover 47 are positioned on both sides of the hydraulic cylinder tube 45. The first hydraulic cover 46 seals an upper opening of the hydraulic cylinder tube 45, and the second hydraulic cover 47 seals a lower opening of the hydraulic cylinder tube 45.

The hydraulic piston 48 is located inside the hydraulic cylinder tube 45. The hydraulic piston 48 forms a first driving chamber 4c between the hydraulic piston 48 and the first hydraulic cover 46, and forms a second driving chamber 4d between the hydraulic piston 48 and the second hydraulic cover 47. A sealing material such as an O-ring is attached to the outer peripheral surface of the hydraulic piston 48. In the present embodiment, the hydraulic piston 48 is configured as a single-component piston. Alternatively, the hydraulic piston 48 may include multiple components. For example, the hydraulic piston 48 may include two plates and a rod located therebetween. In this case, the hydraulic oil may be supplied between the two plates.

In the present embodiment, a lower opening of the gas cylinder tube 35 is sealed by the first hydraulic cover 46. The rod 53 penetrates the first hydraulic cover 46, and couples the gas piston 37 and the hydraulic piston 48 to each other. Alternatively, similar to the gas compressor disclosed in the Patent Literature 1, the lower opening of the gas cylinder tube 35 may be sealed by a middle cover, and a middle tube surrounding the space around the rod 53 may be located between the middle cover and the first hydraulic cover 46.

Each of the first hydraulic cover 46 and the second hydraulic cover 47 is, for example, disc-shaped. In the present embodiment, an end surface of the first hydraulic cover 46, the end surface facing radially outward, includes a first supply/discharge port 7c, and an end surface of the second hydraulic cover 47, the end surface facing radially outward, includes a second supply/discharge port 7d. However, the positions of the first supply/discharge port 7c and the second supply/discharge port 7d are not limited to this. For example, the first supply/discharge port 7c may be included in an upper part of the hydraulic cylinder tube 45, and a below-described first hydraulic passage 73 may be eliminated. Similarly, the second supply/discharge port 7d may be included in a lower part of the hydraulic cylinder tube 45, and a below-described second hydraulic passage 74 may be eliminated.

The first hydraulic cover 46 includes the first hydraulic passage 73, through which the first supply/discharge port 7c and the first driving chamber 4c communicate with each other. The second hydraulic cover 47 includes the second hydraulic passage 74, through which the second supply/discharge port 7d and the second driving chamber 4d communicate with each other.

The gas supply passage 11 is connected to the suction port 6a of the first gas booster 2A, and the gas discharge passage 13 is connected to the delivery port 6d of the second gas booster 2B. The delivery port 6b of the first gas booster 2A and the suction port 6c of the second gas booster 2B are connected to each other by the gas communication passage 12.

The gas piston 33 and the gas piston 37 move alternately. When the gas piston 33 moves downward, the gas is supplied from the gas supply passage 11 to the compression chamber 3a through an upstream portion of the first gas passage 61 and the second gas passage 64. When the gas piston 33 moves upward and the gas piston 37 moves downward, the gas is supplied from the compression chamber 3a to the compression chamber 3b through the second gas passage 64, a downstream portion of the first gas passage 61, the gas communication passage 12, an upstream portion of the first gas passage 65, and the second gas passage 68. At the time, the gas is compressed due to an area difference between the compression chamber 3a and the compression chamber 3b. When the gas piston 37 moves upward, the gas is compressed in the compression chamber 3b to at least the pressure downstream of the check valve 67, and the compressed gas is discharged through the second gas passage 68, a downstream portion of the first gas passage 65, and the gas discharge passage 13.

A supply/discharge passage 14 and a supply/discharge passage 16 are connected to the first supply/discharge port 7a of the first gas booster 2A and the first supply/discharge port 7c of the second gas booster 2B, respectively. The second supply/discharge port 7b of the first gas booster 2A and the second supply/discharge port 7d of the second gas booster 2B are connected to each other by a hydraulic communication passage 15. In other words, through the hydraulic communication passage 15, the second driving chamber 4b of the first gas booster 2A and the second driving chamber 4d of the second gas booster 2B communicate with each other.

Accordingly, when the hydraulic oil is supplied from the pump to the first driving chamber 4a through the supply/discharge passage 14 and the first hydraulic passage 71, the hydraulic piston 44 moves downward, and the hydraulic oil is supplied from the second driving chamber 4b to the second driving chamber 4d through the second hydraulic passage 72, the hydraulic communication passage 15, and the second hydraulic passage 74. When the hydraulic oil is supplied to the second driving chamber 4d, the hydraulic piston 48 moves upward, and the hydraulic oil is discharged from the first driving chamber 4c through the first hydraulic passage 73 and the supply/discharge passage 16.

On the other hand, when the hydraulic oil is supplied from the pump to the first driving chamber 4c through the supply/discharge passage 16 and the first hydraulic passage 73, the hydraulic piston 48 moves downward, and the hydraulic oil is supplied from the second driving chamber 4d to the second driving chamber 4b through the second hydraulic passage 74, the hydraulic communication passage 15, and the second hydraulic passage 72. When the hydraulic oil is supplied to the second driving chamber 4b, the hydraulic piston 44 moves upward, and the hydraulic oil is discharged from the first driving chamber 4a through the first hydraulic passage 71 and the supply/discharge passage 14.

The diameter of the hydraulic piston 44 of the first gas booster 2A and the diameter of the hydraulic piston 48 of the second gas booster 2B are equal to each other. Accordingly, the stroke of the hydraulic piston 44 and the gas piston 33 and the stroke of the hydraulic piston 48 and the gas piston 37 are equal to each other. Alternatively, the diameter of the hydraulic piston 44 and the diameter of the hydraulic piston 48 may be different from each other, and the stroke of the hydraulic piston 44 and the gas piston 33 and the stroke of the hydraulic piston 48 and the gas piston 37 may be different from each other.

A pressure sensor 91, which detects the pressure of the first driving chamber 4a, is located on the supply/discharge passage 14. A pressure sensor 93, which detects the pressure of the first driving chamber 4c, is located on the supply/discharge passage 16. Alternatively, the pressure sensor 91 may be located on the hydraulic cylinder tube 41 or on the first hydraulic cover 42, and the pressure sensor 93 may be located on the hydraulic cylinder tube 45 or on the first hydraulic cover 46. A pressure sensor 92, which detects the pressure of the second driving chambers 4b and 4d, is located on the hydraulic communication passage 15. Alternatively, the pressure sensor 92 may be located on one of the hydraulic cylinder tubes 41 and 45, or may be located on one of the second hydraulic covers 43 and 47.

The aforementioned position detectors 8A and 8B are mounted to the second hydraulic covers 43 and 47, respectively. The position detector 8A detects the position of the hydraulic piston 44, and the position detector 8B detects the position of the hydraulic piston 48.

The structure of the position detector 8A is the same as that of the position detector 8B. In the present embodiment, each of the position detectors 8A and 8B is a magnetostrictive linear sensor. Alternatively, each of the position detectors 8A and 8B may be a different type of sensor, such as a laser sensor or an infrared sensor.

Specifically, the position detector 8A includes: a probe 81, which is mounted to the second hydraulic cover 43 and which extends in a manner to penetrate the hydraulic piston 44; and a magnet 84 mounted to the hydraulic piston 44. The probe 81 includes: a head 82 positioned outside the second hydraulic cover 43; and a sensor rod 83 extending from the head 82. In the present embodiment, the magnet 84 is ring-shaped, and is penetrated by the sensor rod 83. The hydraulic piston 44 and the rod 51 include a hole 52 therein to avoid interference with the sensor rod 83.

Similarly, the position detector 8B includes: a probe 81, which is mounted to the second hydraulic cover 47 and which extends in a manner to penetrate the hydraulic piston 48; and a magnet 84 mounted to the hydraulic piston 48. The probe 81 includes: a head 82 positioned outside the second hydraulic cover 43; and a sensor rod 83 extending from the head 82. In the present embodiment, the magnet 84 is ring-shaped, and is penetrated by the sensor rod 83. The hydraulic piston 48 and the rod 53 include a hole 54 therein to avoid interference with the sensor rod 83.

As described above, in the gas compressor 1 of the present embodiment, since the position detectors 8A and 8B are mounted to the respective second hydraulic covers 43 and 47, which face the respective hydraulic pistons 44 and 48, whatever positions the hydraulic pistons 44 and 48 are at, the positions of the hydraulic pistons 44 and 48 can be detected. Therefore, the stroke of each of the hydraulic pistons 44 and 48 can be detected by using each of the position detectors 8A and 8B as a stroke sensor.

Further, by performing comprehensive control of the flow rate of the gas, the flow rate of the hydraulic oil, the stroke of each of the hydraulic pistons 44 and 48, etc., by using unshown control circuitry, stable supply of the compressed gas can be achieved.

In addition, since the present embodiment adopts the pressure sensors 91, 92, and 93, the pressure of the compression chamber 3a can be inferred from values detected by the pressure sensors 91 and 92, and also, the pressure of the compression chamber 3b can be inferred from values detected by the pressure sensors 93 and 92. Therefore, unlike a case where the pressures of the compression chambers 3a and 3b are directly detected, the pressures of the compression chambers 3a and 3b can be obtained without requiring the use of special pressure sensors that are capable of withstanding a high temperature and a high pressure.

### <Variations>

The present disclosure is not limited to the above-described embodiment. Various modifications can be made without departing from the scope of the present disclosure.

For example, the axial direction of each of the gas cylinder 3A, the gas cylinder 3B, the hydraulic cylinder 4A, and the hydraulic cylinder 4B need not be the upward-downward direction, but may be a lateral direction. However, in a case where the axial direction of each of the gas cylinder 3A, the gas cylinder 3B, the hydraulic cylinder 4A, and the hydraulic cylinder 4B is the upward-downward direction as in the above-described embodiment, the installation area of the gas compressor 1 can be reduced compared to a case where the axial direction of each of the gas cylinder 3A, the gas cylinder 3B, the hydraulic cylinder 4A, and the hydraulic cylinder 4B is the lateral direction. Since the space above the gas cylinders 3A and 3B can be utilized as a maintenance space, a gap between the first gas booster 2A including the gas cylinder 3A and the hydraulic cylinder 4A and the surrounding structure, and a gap between the second gas booster 2B including the gas cylinder 3B and the hydraulic cylinder 4B and the surrounding structure, can be reduced. Further, since the gas cylinders 3A and 3B are positioned above the hydraulic cylinders 4A and 4B, the gas pistons 33 and 37 can be suspended from above, which makes it possible to increase the maintainability.

Still further, conversely to the above-described embodiment, the first supply/discharge port 7a of the first gas booster 2A and the first supply/discharge port 7c of the second gas booster 2B may be connected to each other by the hydraulic communication passage 15, and the supply/discharge passage 14 and the supply/discharge passage 16 may be connected to the second supply/discharge port 7b of the first gas booster 2A and the second supply/discharge port 7d of the second gas booster 7B, respectively. In other words, through the hydraulic communication passage 15, the first driving chamber 4a of the first gas booster 2A and the first driving chamber 4c of the second gas booster 2B may communicate with each other. In this case, the pressure sensor 92 located on the hydraulic communication passage 15 detects the pressure of the first driving chambers 4a and 4c; the pressure sensor 91 located on the supply/discharge passage 14 detects the pressure of the second driving chamber 4b; and the pressure sensor 93 located on the supply/discharge passage 16 detects the pressure of the second driving chamber 4d.

The gas compressor 1 may include only the first gas booster 2A, and may compress the gas in one stage. In this case, the hydraulic oil is supplied from the pump to the first driving chamber 4a and the second driving chamber 4b of the first gas booster 2A alternately. However, if the configuration described in the above embodiment is adopted, the pressure of the gas led into one of the compression chambers 3a and 3b of the first and second gas boosters 2A and 2B can be utilized for gas compression in the other compression chamber.

### <Summary>

The present disclosure provides, as a first mode, a gas compressor including: a gas cylinder including a gas cylinder tube, a gas cover, and a gas piston, the gas cover being positioned on one side of the gas cylinder tube, the gas piston being located inside the gas cylinder tube and forming a compression chamber between the gas piston and the gas cover; a hydraulic cylinder including a hydraulic cylinder tube, a first hydraulic cover, a second hydraulic cover, and a hydraulic piston, the first hydraulic cover and the second hydraulic cover being positioned on both sides of the hydraulic cylinder tube, respectively, the hydraulic piston being located inside the hydraulic cylinder tube, forming a first driving chamber between the hydraulic piston and the first hydraulic cover, and forming a second driving chamber between the hydraulic piston and the second hydraulic cover; a rod that penetrates the first hydraulic cover and that couples the gas piston and the hydraulic piston to each other; and a position detector that is mounted to the second hydraulic cover and that detects a position of the hydraulic piston.

According to the above configuration, since the position detector is mounted to the second hydraulic cover, which faces the hydraulic piston, whatever position the hydraulic piston is at, the position of the hydraulic piston can be detected. Therefore, the stroke of the hydraulic piston can be detected by using the position detector as a stroke sensor.

As a second mode, in the first mode, an axial direction of each of the gas cylinder and the hydraulic cylinder may be an upward-downward direction, and the hydraulic cylinder may be located under the gas cylinder. According to this configuration, the installation area of the gas compressor can be reduced compared to a case where the axial direction of each of the gas cylinder and the hydraulic cylinder is a lateral direction. Further, since the space above the gas cylinder can be utilized as a maintenance space, a gap between a gas booster including the gas cylinder and the hydraulic cylinder and the surrounding structure can be reduced. Still further, since the gas cylinder is positioned above the hydraulic cylinder, the gas piston can be suspended from above, which makes it possible to increase the maintainability.

As a third mode, in the first or second mode, for example, the position detector may include a magnetostrictive linear sensor including: a probe that is mounted to the second hydraulic cover and that extends in a manner to penetrate the hydraulic piston; and a magnet mounted to the hydraulic piston.

As a fourth mode, in any one of the first to third modes, the above gas compressor may further include a pressure sensor that detects a pressure of the first driving chamber; and a pressure sensor that detects a pressure of the second driving chamber. According to this configuration, the pressure of the compression chamber can be inferred from a value detected by the pressure sensor. Therefore, unlike a case where the pressure of the compression chamber is directly detected, the pressure of the compression chamber can be obtained without requiring the use of a special pressure sensor that is capable of withstanding a high temperature and a high pressure.

As a fifth mode, in any one of the first to fourth modes, the gas compressor may include a first gas booster and a second gas booster. Each of the first gas booster and the second gas booster may include the gas cylinder, the hydraulic cylinder, the rod, and the position detector. Gas may be supplied from the compression chamber of the first gas booster to the compression chamber of the second gas booster through a gas communication passage. The first driving chamber of the first gas booster and the first driving chamber of the second gas booster, or the second driving chamber of the first gas booster and the second driving chamber of the second gas booster, may communicate with each other through a hydraulic communication passage. According to this configuration, the pressure of the gas led into one of the compression chambers of the first and second gas boosters can be utilized for gas compression in the other compression chamber.

### Reference Signs List

- 1: gas compressor
- 12: gas communication passage
- 15: hydraulic communication passage
- 2A: first gas booster
- 2B: second gas booster
- 3A, 3B: gas cylinder
- 31, 35: gas cylinder tube
- 32, 36: gas cover
- 33, 37: gas piston
- 3a, 3b: compression chamber
- 4A, 4B: hydraulic cylinder
- 41, 45: hydraulic cylinder tube
- 42, 46: first hydraulic cover
- 43, 47: second hydraulic cover
- 44, 48: hydraulic piston
- 4a, 4c: first driving chamber
- 4b, 4d: second driving chamber
- 51,53: rod
- 8A, 8B: position detector
- 81: probe
- 84: magnet
- 91, 92, 93: pressure sensor

## Claims

1. A gas compressor comprising:
a gas cylinder including a gas cylinder tube, a gas cover, and a gas piston, the gas cover being positioned on one side of the gas cylinder tube, the gas piston being located inside the gas cylinder tube and forming a compression chamber between the gas piston and the gas cover;
a hydraulic cylinder including a hydraulic cylinder tube, a first hydraulic cover, a second hydraulic cover, and a hydraulic piston, the first hydraulic cover and the second hydraulic cover being positioned on both sides of the hydraulic cylinder tube, respectively, the hydraulic piston being located inside the hydraulic cylinder tube, forming a first driving chamber between the hydraulic piston and the first hydraulic cover, and forming a second driving chamber between the hydraulic piston and the second hydraulic cover;
a rod that penetrates the first hydraulic cover and that couples the gas piston and the hydraulic piston to each other; and
a position detector that is mounted to the second hydraulic cover and that detects a position of the hydraulic piston.

2. The gas compressor according to claim 1, wherein
an axial direction of each of the gas cylinder and the hydraulic cylinder is an upward-downward direction, and the hydraulic cylinder is located under the gas cylinder.

3. The gas compressor according to claim 1 or 2, wherein
the position detector includes a magnetostrictive linear sensor including:
a probe that is mounted to the second hydraulic cover and that extends in a manner to penetrate the hydraulic piston; and
a magnet mounted to the hydraulic piston.

4. The gas compressor according to claim 1 or 2, further comprising:
a pressure sensor that detects a pressure of the first driving chamber; and
a pressure sensor that detects a pressure of the second driving chamber.

5. The gas compressor according to claim 1 or 2, comprising a first gas booster and a second gas booster, wherein
each of the first gas booster and the second gas booster includes the gas cylinder, the hydraulic cylinder, the rod, and the position detector,
gas is supplied from the compression chamber of the first gas booster to the compression chamber of the second gas booster through a gas communication passage, and
the first driving chamber of the first gas booster and the first driving chamber of the second gas booster, or the second driving chamber of the first gas booster and the second driving chamber of the second gas booster, communicate with each other through a hydraulic communication passage.
